# EUROPÄISCHE PATENTSCHRIFT

(11) **EP 1 212 548 B1**
(45) Veröffentlichungstag und Bekanntmachung des Hinweises auf die Patenterteilung: **28.07.2004**
(21) Anmeldenummer: 00951517.2
(22) Anmeldetag: 16.08.2000
(51) Int. Cl.: F16H 3/24, F16H 3/083

(54) **GETRIEBE**
TRANSMISSION
TRANSMISSION

(30) Priorität: 17.08.1999 DE 19938934
(43) Veröffentlichungstag der Anmeldung: 12.06.2002
(73) Patentinhaber: INSTITUT FÜR MASCHINENELEMENTE UNIVERSITÄT STUTTGART, 70569 Stuttgart (DE)
(72) Erfinder: LECHNER, Gisbert, D-71032 Böblingen (DE); DOGAN, Süreyya, Nejat, D-70569 Stuttgart (DE); RYBORZ, Joachim, D-70569 Stuttgart (DE)
(74) Vertreter: Dreiss, Fuhlendorf, Steimle & Becker
(86) Internationale Anmeldenummer: PCT/EP2000/007978
(87) Internationale Veröffentlichungsnummer: WO 2001/013006

(56) Entgegenhaltungen:
- EP-A- 0 508 967
- EP-A- 0 643 239
- WO-A-98/48199
- DE-A- 2 427 251
- DE-B- 1 093 216
- DE-C- 195 426
- FR-A- 664 812
- GB-A- 210 949
- GB-A- 1 509 880
- US-A- 1 997 855
- US-A- 4 971 156

## Beschreibung

Die Erfindung betrifft ein Getriebe, insbesondere Fahrzeuggetriebe oder Werkzeugmaschinengetriebe, zur Drehmomentübertragung, mit mindestens einem auf einer Getriebewelle angebrachten ersten Zahnrad, und mit mindestens einem auf einer anderen Getriebewelle angebrachten zweiten Zahnrad, wobei die beiden Zahnräder ständig direkt oder indirekt miteinander in Wirkverbindung stehen.

Die in das Getriebe eingeleiteten Drehzahl- und Drehmomentverläufe sind nicht gleichförmig. Insbesondere bei instationären Getrieben, z.B. in einem Kraftfahrzeug, sind die Ungleichförmigkeiten auf der Antriebsseite besonders hoch. Die im Kraftfluss befindlichen Zahnräder übertragen das Drehmoment. Je nach Gangstellung befinden sich aber auch Zahnräder miteinander in Eingriff, die kein Drehmoment übertragen. Die in die Getriebeeingangswelle eingeleiteten Drehungsgleichförmigkeiten bewirken, dass die Zahnräder, die kein Drehmoment übertragen, im Betrieb zu Torsionsschwingungen angeregt werden, was zu einem vermehrten Auftreten von Klapper- und Rasselgeräuschen führt. Bei Getrieben, die in Kraftfahrzeugen eingesetzt werden, fallen diese Klapper und Rasselgeräusche auf Grund Einsparungsmaßnahmen bzgl. des Energieverbrauchs, vermehrten Leichtbaus von Triebstrangkomponenten, steigender Ansprüche der Kunden hinsichtlich Komforts, sowie verschärfter Abgasund Emissionsgrenzwerte seitens des Gesetzgebers immer mehr ins Gewicht.

Es sind eine Reihe von Maßnahmen bekannt, um die unangenehmen Klapper- und Rasselgeräusche zu reduzieren. Die bekannten Maßnahmen erfordern jedoch zusätzlichen Bauraum und sind zudem mit einer Gewichtszunahme sowie einer Verschlechterung des Getriebewirkungsgrades und Verschleißes verbunden. Obwohl die bekannten Maßnahmen mit einem hohen Aufwand und hohen Kosten verbunden sind, können die unangenehmen Klapper- und Rasselgeräusche nur reduziert aber nicht vollständig eliminiert werden.

Ein Getriebe ist aus der DE 24 27 251 A1 bekannt, welche ein Zahnradwechselgetriebe mit auf den Getriebewellen starr angeordneten Zahnrädern offenbart. Aus den EP 0 643 239 A2 und EP 0 508 967 A1 sind Getriebe bekannt, welche Fest- und Losräder aufweisen. Aus der US 1997855 A ist ein gattungsgemäßes Getriebe bekannt, wobei die Losräder standig miteinander in Wirkverbindung stehen. Die Koppelung der Losräder mit dem Wellen ist problematisch.

Aufgabe der Erfindung ist es, ein Getriebe der eingangs geschilderten Art bereitzustellen, bei dem die lästigen Klapper- und Rasselgeräusche vollständig unterbunden werden, und die Koppelung zwischen Losrädern und Wellen optimiert wird.

Die Aufgabe ist bei einem Getriebe der eingangs genannten Art dadurch gelöst, dass dass für beide Zahnräder eines Zahnradpaares jeweils eine Synchronisiereinrichtung vorgesehen ist, welche einen Drehzahlangleich zwischen den Zahnrädern eines Zahnradpaares und den zugehörigen Getriebewellen bewirkt, wenn die Zahnräder wieder an ihre jeweilige Getriebewelle angekoppelt werden.

Dadurch wird erreicht, dass eine Drehbewegung der Getriebewelle nicht auf die darauf angeordneten Zahnräder übertragen wird. Die Zahnräder befinden sich zwar noch mit ihren Gegenrädern in Eingriff, kämmen aber nicht damit. Die Entstehung von Klapper- und Rasselgeräuschen wird vollständig unterbunden, weil der ungleichförmige Drehbewegungsverlauf der Getriebewelle nicht mehr auf die darauf angebrachten Zahnräder übertragen wird. Außerdem wird das Schleppmoment und der Verschleiß reduziert, was zu einer Erhöhung des Wirkungsgrades des Getriebes und durch Reduzierung der bewegten Massen zu einer Verbrauchsminimierung führt. Durch die Verwendung einer Synchronisiereinrichtung für jedes Zahnrad eines Zahnradpaares, was dazu führt, dass während eines Schaltvorgangs die Zahnräder gegeneinander beaufschlagt werden, wird ferner verhindert, dass ein Zustand entsteht, bei dem ein Zahnrad eines Zahnradpaares bereits oder noch vollständig an seine Welle angekoppelt ist, wohingegen das andere vollständig lose ist. Dies könnte ebenfalls zu Rassel- und Klappergeräuschen führen.

Eine besondere Ausführungsart der Erfindung ist dadurch gekennzeichnet, dass an den Wellen-Naben-Verbindungen zwischen der Getriebewelle und den Zahnrädern jeweils ein Lager und eine lösbare formschlüssige Verbindung ausgebildet ist. Dadurch wird ein Freilauf der nicht im Kraftfluss befindlichen Zahnräder ermöglicht. Das Lager, bspw. ein Nadellager, gewährleistet, dass sich die Getriebewelle relativ zu dem darauf angeordneten Zahnrad drehen kann, ohne dass diese Drehbewegung auf das Zahnrad übertragen wird. Je nach gewählter Gangstufe kann eine formschlüssige Verbindung zwischen der Getriebewelle und dem darauf angeordneten Zahnrad hergestellt werden. Auf diese Art und Weise wird ein Losrad zum Festrad.

Eine weitere besondere Ausführungsart der Erfindung ist dadurch gekennzeichnet, dass die lösbare formschlüssige Verbindung zwischen der Getriebewelle und den Zahnrädern, die kein Drehmoment übertragen, durch mindestens eine radial verschiebbare, federkraftbeaufschlagte Passfeder realisiert ist, die mit Hilfe einer Betätigungseinrichtung mit einer nabenseitigen Nut in dem zugehörigen Zahnrad formschlüssig verbindbar ist. Je nach Größe des zu übertragenden Drehmoments wird der Formschluss zwischen der Getriebewelle und dem darauf angeordneten Zahnrad durch eine Passfeder oder mehrere Passfedern realisiert. Die Betätigungseinrichtung kann über eine geeignete Steuerung mechanisch, hydraulisch, magnetisch oder elektrisch betätigt werden. Die Passfeder wirkt dabei in Abhängigkeit von ihrer radialen Position als Mitnehmer für das Zahnrad. Im entkoppelten Zustand ragt die Passfeder radial nicht in die nabenseitige Nut hinein. In diesem Zustand entfaltet das Lager seine Funktion als Freilauf. Das entsprechende Zahnrad hat dann die Eigenschaft eines Losrades. Im gekoppelten Zustand verbindet mindestens eine Passfeder das Zahnrad mit der Welle, so dass das Zahnrad die Eigenschaft eines Festrades hat.

Eine weitere besondere Ausführungsart der Erfindung ist dadurch gekennzeichnet, dass die Betätigungseinrichtung drehfest mit der Getriebewelle verbunden ist und mit einer axial verschiebbaren Nase ausgestattet ist, die mit einer Rampe zusammenwirkt, die an der Passfeder ausgebildet ist. Bei einer axialen Verschiebung der Betätigungseinrichtung gleitet die Nase entlang der Rampe und bewirkt, dass die Passfeder gegen die Federkraft radial nach innen verschoben wird.

Eine weitere besondere Ausführungsart ist dadurch gekennzeichnet, dass die zu der nabenseitigen Nut des zugehörigen Zahnrads gerichtete Kontaktfläche der Passfeder leicht gekrümmt ausgebildet ist, um das freilaufende Zahnrad auf die Wellendrehzahl zu beschleunigen. Des Weiteren wird verhindert, dass die Passfeder beim Ineingriffkommen mit der Nut verkantet. Das hat den Vorteil, dass Beschädigungen und Störungen im Betrieb vermieden werden.

Eine weitere besondere Ausführungsart der Erfindung ist dadurch gekennzeichnet, dass die Getriebewelle als Hohlwelle ausgeführt ist und die darauf befindlichen Zahnräder, die kein Drehmoment übertragen, durch eine in der Hohlwelle befindliche Schaltstange mit einer Betätigungseinrichtung formschlüssig mit der hohl ausgeführten Getriebewelle verbunden werden können.

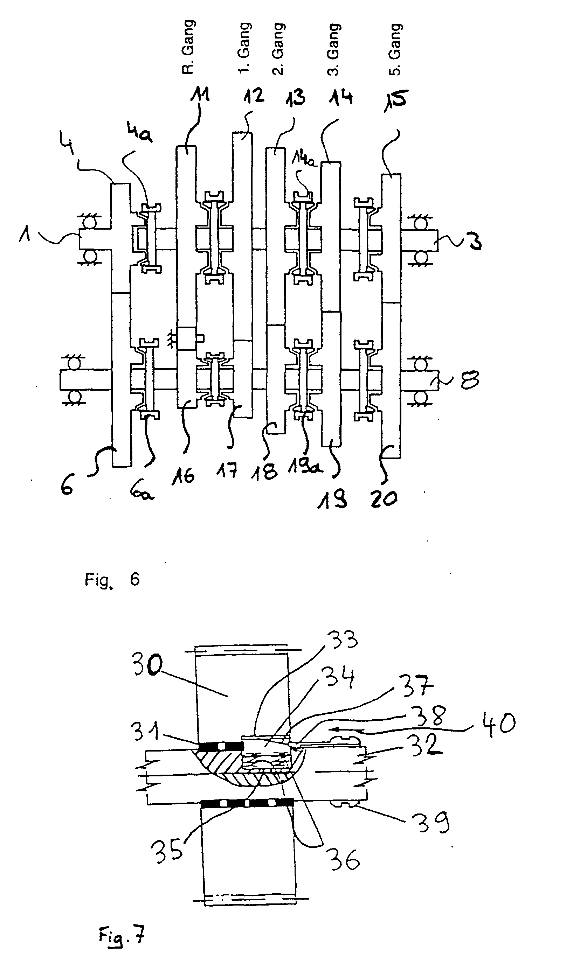

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Die Erfindung wird in Figur 6 gezeigt. In der Zeichnung zeigt:
- Figur 1: die Ansicht eines Schnitts durch eine Zahnradpaarung eines Getriebes;
- Figur 2: ein Getriebeschema gemäß einer zweiten Ausführungsform in vereinfachter Darstellung;
- Figur 3: ein Getriebeschema gemäß einer dritten Ausführungsform in vereinfachter Darstellung;
- Figur 4: die Ansicht eines Schnitts durch eine Zahnradpaarung mit einer exzentrisch gelagerten Getriebewelle;
- Figur 5: die Ansicht eines Schnitts durch eine Zahnradpaarung eines Getriebes gemäß der ersten, zweiten, dritten und vierten Ausführungsform mit einer Ansynchronisierung;
- Figur 6: ein Getriebeschema, in dem nur Losräder vorhanden sind, und die dazugehörigen Synchronisiereinrichtungen gemäß einer ersten Ausführungsform der Erfindung;
- Figur 7: einen Ausschnitt in teilweise ausgebrochener Darstellung eines Getriebes;
- Figur 8: den Ausschnitt aus Figur 7 im entkoppelten Zustand; und
- Figur 9: drei verschiedene Ansichten einer Passfeder, die bei der in den Figuren 7 und 8 dargestellten Ausführungsform verwendet wird;
- Figur 10: die Ansicht eines Halbschnitts durch ein Zahnrad und eine Getriebewelle.

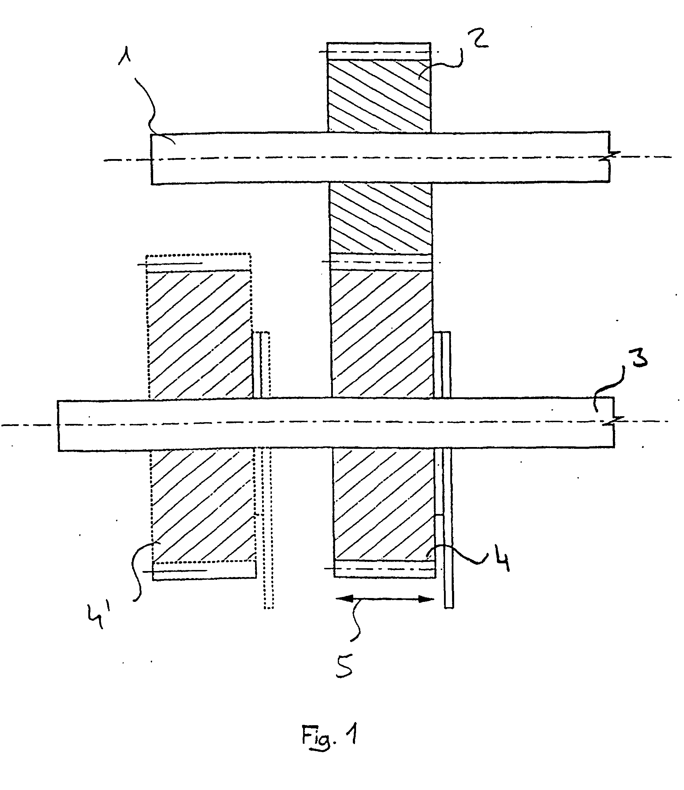

Bei der in Figur 1 dargestellten Ansicht eines Schnitts durch eine Zahnradpaarung sieht man ein Zahnrad 2, das fest mit einer Antriebswelle 1 verbunden ist. Das Zahnrad 2 ist mit einem Zahnrad 4 im Eingriff, das mit einer Abtriebswelle 3 fest verbunden ist. Dadurch kann ein Drehmoment von der Antriebswelle 1 über das Zahnrad 2 auf das Zahnrad 4 und somit auf die Abtriebswelle 3 übertragen werden.

Durch einen Pfeil 5 ist angedeutet, dass das Zahnrad 4 auf der Abtriebswelle 3 axial verschiebbar ist. Die axiale Verschiebung kann durch eine formschlüssige Verbindung des Zahnrades mit der Abtriebswelle 3, wie z.B. ein Vielkeilwellenprofil oder eine Passfeder, erfolgen. Die verschobene Stellung des Zahnrads 4 ist bei 4' gestrichelt dargestellt. In dieser Stellung überträgt das Zahnradpaar kein Drehmoment, weil sich das Zahnrad 2 nicht mit dem Zahnrad 4 im Eingriff befindet. Dadurch kann es auch nicht zu Entfaltung von störenden Klapper- und Rasselgeräuschen kommen.

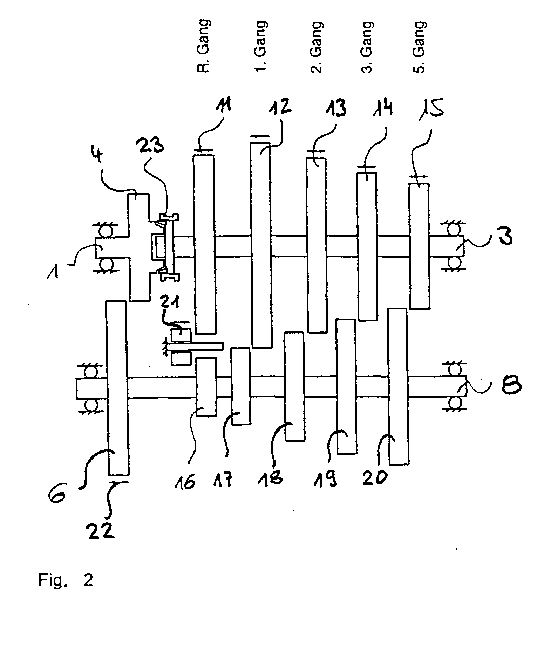

In der Figur 2 sind am Beispiel eines Koaxialgetriebes mit fünf Vorwärts- und einem Rückwärtsgang die prinzipiellen Schalt- und Verschiebemöglichkeiten für die Herstellung der Eingriffskopplung von Zahnradpaaren dargestellt.

Bei der in Figur 2 dargestellten Ausführungsform sind auf der Abtriebswelle 3 fünf Zahnräder 11, 12, 13, 14 und 15 angeordnet. Das Zahnrad 11 befindet sich im geschalteten Rückwärtsgang im Kraftfluss. Die Zahnräder 12 bis 15 befinden sich in geschalteten Gängen 1, 2, 3 und 5 im Kraftfluss.

Durch einen Doppelpfeil ist jeweils angedeutet, dass jedes der Zahnräder 11 bis 15 axial auf der Abtriebswelle 3 verschiebbar ist und das Zwischenrad 21 des R-Gangs ebenfalls axial verschiebbar ist. Durch axiales Verschieben des entsprechenden Zahnrads 11 bis 15 und 21 zu seinem Gegenrad wird der gewünschte Leistungsfluss ermöglicht. Gleichzeitig wird durch die axiale Verschiebbarkeit der Zahnräder 11 bis 15 und 21 erreicht, dass sämtliche nicht im Kraftfluss befindlichen Zahnräder aus dem Eingriff mit dem jeweiligen Gegenrad genommen werden können. Die Gegenräder auf der Vorgelegewelle 8 sind mit den Bezugszeichen 16, 17, 18, 19 und 20 versehen. Im ersten Gang befinden sich die Zahnräder 4 und 6 sowie die Zahnräder 12 und 17 miteinander im Eingriff. Im zweiten Gang befinden sich die Zahnräder 4 und 6 sowie die Zahnräder 13 und 18 miteinander in Eingriff. Im dritten Gang befinden sich die Zahnräder 4 und 6 sowie die Zahnräder 14 und 19 miteinander im Eingriff. Der vierte Gang ist ein Direktgang, der durch die Synchronisiereinheit 23 die Antriebswelle 1 mit der Getriebeausgangswelle 3 direkt verbindet. Im fünften Gang befinden sich die Zahnräder 4 und 6 sowie die Zahnräder 15 und 20 miteinander in Eingriff. Durch einen Doppelpfeil 22 ist angedeutet, dass das Konstantenrad 6 axial auf der Vorgelegewelle 8 verschiebbar ist. Durch eine Verschiebung des auf der Vorgelegewelle 8 angebrachten Zahnrads 6 wird eine Eingriffstellung mit dem Zahnrad 4 auf der Antriebswelle 1 ermöglicht. Durch die axiale Verschiebemöglichkeit der Zahnräder 6, 11 bis 15 und 21 werden die Zahnräder einer bestimmten Gangstufe für den Leistungsfluss geschaltet. Dadurch können alle nicht im Eingriff befindlichen Zahnräder keine unangenehmen Geräusche verursachen.

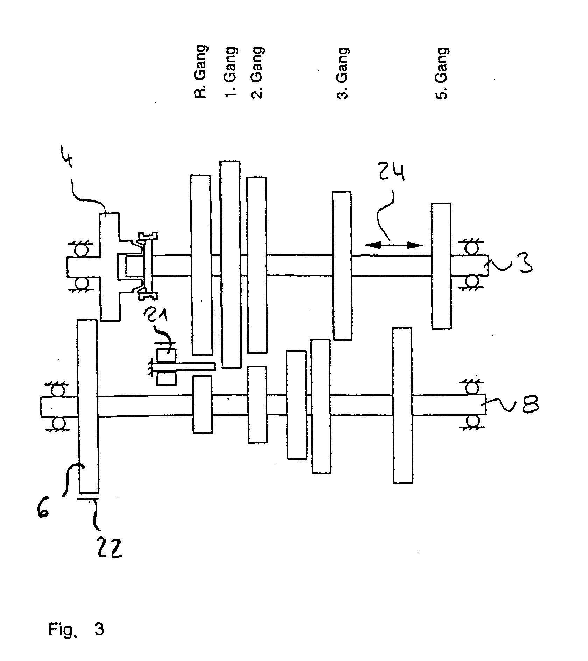

In Figur 3 ist eine andere Möglichkeit dargestellt, wie die Zahnräder mit ihren Gegenrädern in Eingriff gebracht bzw. entkoppelt werden können. Durch einen Pfeil 24 ist angedeutet, dass die gesamte Abtriebswelle 3 zusammen mit den darauf angeordneten Zahnrädern bis zum Eingriff mit dem gewünschten Gegenrad axial verschiebbar ist. Für einen Schaltvorgang wird die gesamte Abtriebswelle 3 axial so verschoben, dass der gewünschte Leistungsfluss entsteht. Durch einen Pfeil 22 ist angedeutet, dass das Konstantenrad 6 axial auf der Vorgelegewelle 8 verschiebbar ist. Je nach Gangstellung kann dadurch ein Leistungsfluss von Zahnrad 4 auf das Zahnrad 6 und somit auf die Vorgelegewelle 8 ermöglicht werden. Das Zwischenrad 21 des Rückwärtsgangs wird nur zum Schalten des Rückwärtsgangs axial verschoben.

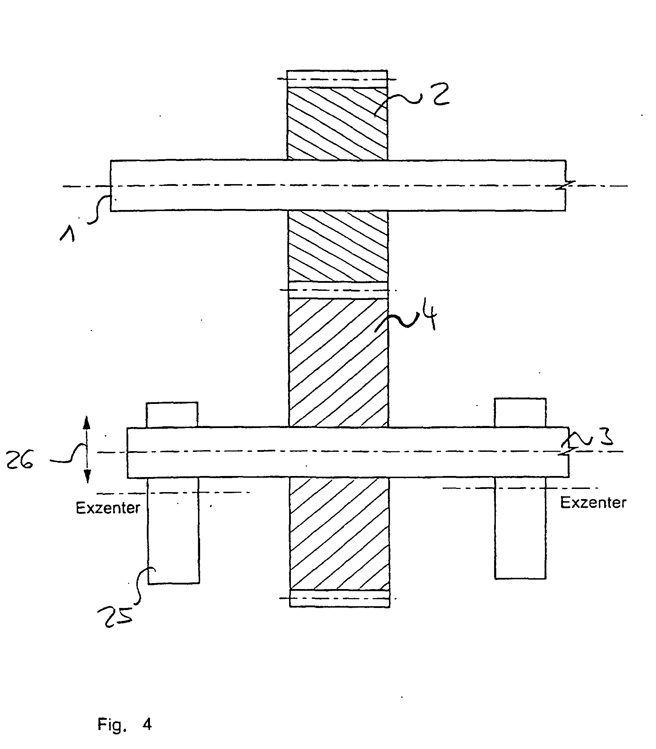

In Figur 4 ist die Ansicht eines Schnitts durch eine Zahnradpaarung mit einer exzentrisch gelagerten Getriebewelle gemäß einer vierten Ausführungsform dargestellt. Ein Zahnrad 2, das fest mit einer Antriebswelle 1 verbunden ist, ist mit einem Zahnrad 4 im Eingriff. Dadurch kann die Leistung von der Antriebswelle 1 über das Zahnrad 2 auf das Zahnrad 4 und somit auf die Getriebewelle 3 (Abtriebswelle) übertragen werden. Die exentrische Lagerung 25 der Getriebewelle 3 ermöglicht eine radiale Verschiebung der Getriebewelle 3 mit dem Zahnrad 4. Durch diese radiale Verschiebung, angedeutet durch einen Doppelpfeil 26, eine nachfolgende axiale Verschiebung der Getriebewelle 3 oder einzelner Zahnräder und eine abschließende radiale Rückverschiebung wird die gewünschte Gangstellung ermöglicht. Die radiale Verschiebung der Getriebewelle 3 ermöglicht die Verwendung beliebiger Verzahnungsarten (Gerad-, Schräg-, Pfeilverzahnung, etc.).

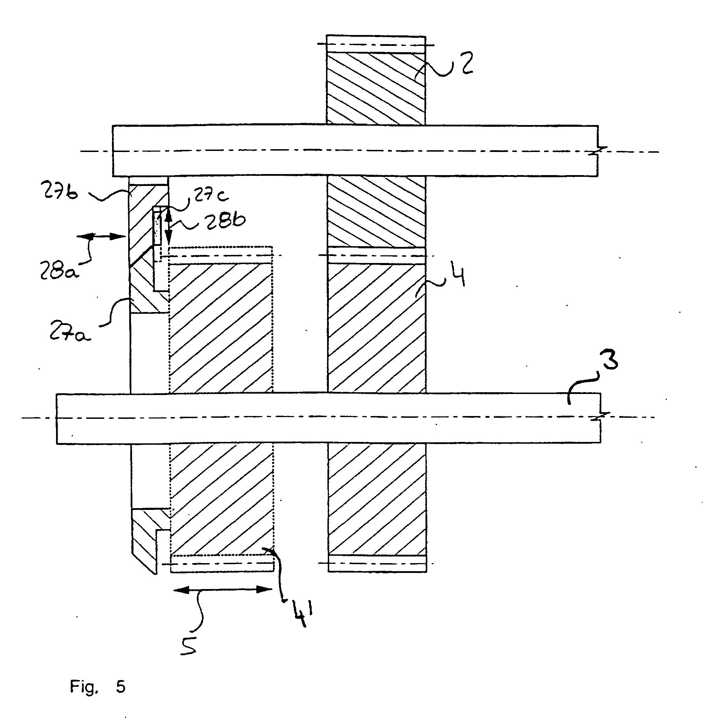

In Figur 5 ist die Ansicht eines Schnitts durch eine Zahnradpaarung eines Getriebes gemäß der ersten, zweiten, dritten und vierten Ausführungsform mit einer Ansynchronisierung dargestellt. Sie wird am Beispiel der ersten Ausführungsform erläutert. Ein Zahnrad 4' weist eine Ansychronisierungseinheit auf, die aus der Komponente 27a, b und c besteht. Die Ansychronisierung der beiden in Figur 5 dargestellten Zahnräder 2 und 4' erfolgt, wie durch einen Pfeil 28a angedeutet ist, durch axiale Verschiebung der Komponente 27b, die eine Kraft auf die Komponenten 27a und demzufolge auf das Zahnrad 4' ausübt. Durch die schräg ausgeführten Komponenten 27a und b wird in Folge von Reibung ein Drehzahlausgleich des Zahnrads 4' zu Zahnrad 2 durchgeführt. Bei Gleichlauf erfolgt eine axiale Verschiebung des Zahnrads 4' in die Sollstellung, die mit 4 bezeichnet ist. Somit sind die Zahnräder 2 und 4 im Eingriff und können die Leistung übertragen. Für die Herausnahme dieses Zahnrads aus dem Eingriff wird die Ansynchronisiereinheit mit dem Riegel 27c verriegelt, was durch den Pfeil 28b verdeutlicht ist. Somit kann durch eine axiale Verschiebung des Zahnrads 4 die Herausnahme aus dem Eingriff erfolgen.

In der Figur 6 ist ein Getriebeschema, in dem alle Zahnräder als Losräder ausgeführt sind, mit den dazugehörigen Synchronisierungseinrichtungen gemäß der ersten Ausführungsform der Erfindung dargestellt. Der Hauptunterschied zum klassischen Handschaltgetriebe beruht auf der Ausführung sämtlicher Zahnräder als Losräder, die jedes für sich mit Ausnahme des Zwischenrads des Rückwärtsgangs eine Synchronisiereinrichtung aufweisen. Entsprechend dem zu wählenden Gang erfolgt die Betätigung der entsprechenden Synchronisierungseinrichtungen. Beispielsweise analog zu der zweiten Ausführungsform, werden im dritten Gang die Zahnräder 4, 6 und 14, 19 mit Hilfe der Synchronisierungseinrichtungen 4a, 7a, 14a und 19a geschaltet. Da nur diese Zahnräder fest mit den Getriebewellen verbunden sind und die Leistung übertragen, rotieren alle anderen Zahnräder nicht, d.h. sie sind von der Drehbewegung entkoppelt, und somit verursachen sie keine unangenehmen Klapper- und Rasselgeräusche.

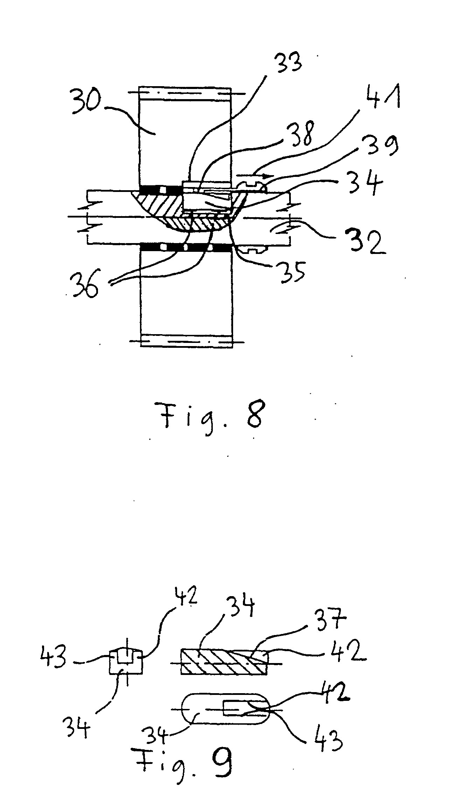

In Figur 7 ist ein Ausschnitt eines Getriebes dargestellt. Ein Zahnrad 30 ist mit Hilfe eines Nadellagers 31 drehbar auf einer Welle 32 gelagert. D.h., das Zahnrad 30 ist relativ zu der Welle 32 drehbar und umgekehrt. In dem Zahnrad 30 ist nabenseitig eine Axialnut 33 ausgespart, die sich etwa über die Hälfte der Breite des Zahnrads 30 in Richtung der Achse der Welle 32 erstreckt. Eine Passfeder 34 greift in die Nut 33 und stellt so einen Formschluss zwischen der Welle 32 und dem Zahnrad 30 her.

In der Welle 32 ist eine Ausnehmung 35 vorgesehen, die zur Aufnahme der Passfeder 34 dient. Zwei Federn 36 drücken die Passfeder 34 in radialer Richtung nach außen. An der Passfeder 34 ist auf der der Angriffsfläche der Federn 36 gegenüberliegenden Seite eine Rampe 37 ausgebildet. Die Oberfläche der Rampe 37 ist um etwa 15° zu einer Parallelen zu der Längsachse der Welle 32 geneigt. Die Rampe 37 wirkt mit einer Nase 38 zusammen, die an einer Betätigungseinrichtung 39 befestigt ist. Die Betätigungseinrichtung 39 ist mit der Welle 32 formschlüssig auf dieser Welle verbunden und kann nur axial verschoben werden. Bei der in Figur 7 dargestellten Stellung der Betätigungseinrichtung 39 kommt die Nase gerade in Anlage an der Rampe 37. Je weiter die Betätigungseinrichtung 39 axial auf der Welle 32 in Richtung eines Pfeils 40 verschoben wird, desto mehr wird die Passfeder 34 entgegen der Vorspannkraft der Federn 36 in Figur 7 nach unten gedrückt.

Bei der in Figur 8 dargestellten Stellung der Betätigungseinrichtung 39, die mit der Welle 32 formschlüssig verbunden ist, ist die Passfeder 34 ganz in die Ausnehmung 35 der Welle 32 aufgenommen. Die Federn 36 liegen auf Block. In dieser Stellung existiert kein Formschluss mehr zwischen der Welle 32 und dem Zahnrad 30. Die Welle 32 kann sich drehen, ohne dass diese Drehung auf das Zahnrad 30 übertragen wird.

Um wieder einen Formschluss zwischen der Welle 32 und dem Zahnrad 30 herzustellen, muss die Betätigungseinrichtung 39 in Richtung eines Pfeils 41 axial verschoben werden. Das hat dann zur Folge, dass die Passfeder 34 durch die Kraft der Federn 36 in die Nut 33 gedrückt wird.

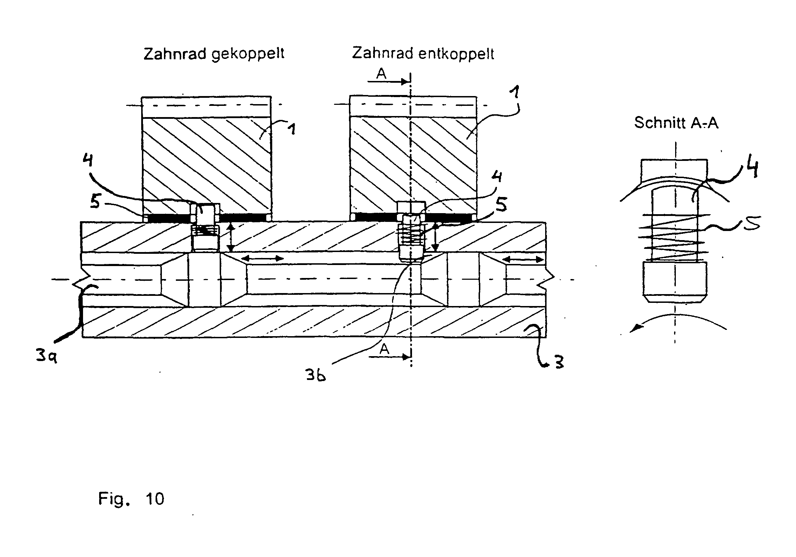

In Figur 9 sind drei verschiedene Ansichten der Passfeder dargestellt. Wie man erkennt, ist die Rampe 37 von zwei Führungsschenkeln 42 und 43 umfasst. Der Abstand der Führungsschenkel 42 und 43 voneinander ist an die Abmessungen der Nase 38 angepasst. Außerdem erkennt man in der Seitenansicht von rechts, dass die im eingebauten Zustand zu der nabenseitigen Nut 33 gerichtete Kontaktfläche der Passfeder 34 leicht gekrümmt ausgebildet ist. Die Krümmung dieser Kontaktfläche ermöglicht eine Angleichung der Drehzahlen zwischen der Welle 32 und dem Zahnrad 30. Erst wenn beide Bauteile etwa die gleiche Drehzahl haben, kann die Passfeder 34 in die Nut 38 einrasten.

Bei einer weiteren Ausführungsart ist die Getriebewelle 3 als Hohlwelle ausgeführt, wobei die darauf befindlichen Zahnräder 1 als Losräder, die kein Drehmoment übertragen, durch eine in der Hohlwelle 3 befindliche Schaltstange 3a mit einer Betätigungseinrichtung formschlüssig mit der hohl ausgeführten Getriebewelle verbunden werden können. Der Formschluss zwischen der Getriebewelle 3 und dem darauf angeordneten Zahnrad 1 wird durch eine oder mehrere Stift-Feder-Betätigungseinrichtungen 4, 5 realisiert. Die Schaltstange 3a kann über eine geeignete Steuerung mechanisch, hydraulisch, magnetisch oder elektrisch betätigt werden. Der Stift 4 wirkt dabei in Abhängigkeit von der radialen Position als Mitnehmer für das Zahnrad 1. Im entkoppelten Zustand wird der Stift durch die Feder 5 radial in die Getriebewellenbohrung hinein verschoben. In diesem Zustand enfaltet das Lager zwischen dem Zahnrad und der Getriebewelle seine Funktion als Freilauf und somit besitzt das Zahnrad entsprechend die Eigenschaften eines Losrads.

Der Schaltvorgang wird durch die Verschiebung der Schaltwelle 3a ausgelöst. Die schiefe Ebene 3b auf der Schaltstange 3a bewirkt beim Verschiebevorgang einen Drehzahlangleich des Zahnrads 1 zu Getriebewelle 3. Die halbrunde Ausführung des Stifts 4 der Betätigungseinrichtung dient zur Herstellung des Drehzahlangleichs. Bei fast gleicher Drehzahl der Getriebewelle 3 und des Zahnrads 1 wird der Stift 4 komplett von der Schaltstange 3a in die vorgegebene Bohrung in der Zahnradnabe des Zahnrads 1 eingefahren. Der so entstandene Formschluss ermöglicht dem Zahnrad 1 die Ausführung der Funktion eines Festrads, das mit der Getriebewelle 3 fest verbunden ist.

Diese Ausführung erlaubt gezielt eine Schaltung der benötigten Zahnräder entsprechend der gewählten Schaltstellung des Getriebes. Da alle anderen Zahnräder des Getriebes hierbei als Losräder ausgeführt sind, kann es nicht mehr zu störenden Klapper- und Rasselgeräuschen kommen.

## Patentansprüche

1. Getriebe, insbesondere Fahrzeuggetriebe oder Werkzeugmaschinengetriebe, zur Drehmomentübertragung, mit mindestens einem auf einer Getriebewelle (1, 3; 32) angebrachten ersten Zahnrad (4, 11, 12, 13, 14, 15; 30), und mit mindestens einem auf einer anderen Getriebewelle (8) angebrachten zweiten Zahnrad (6, 16, 17, 18, 19, 20), wobei die beiden Zahnräder (4, 6; 11, 16; 12, 17; 13, 18; 14, 19; 15, 20) ständing direkt oder indirekt miteinander in Wirkverbindung stehen, wobei die Zahnräder (4, 6; 11, 16; 12, 17; 13, 18; 14, 19; 15, 20), die kein Drehmoment übertragen, zur Vermeidung von Klapper- und Rasselgeräuschen von den zugehörigen Getriebewellen (1, 3; 8) entkoppelbar sind, **dadurch gekennzeichnet, dass** für beide Zahnräder (4, 6; 11, 16; 12, 17; 13, 18; 14, 19; 15, 20) eines Zahnradpaares jeweils eine Synchronisiereinrichtung (4a, 6a, 14a, 19a) vorgesehen ist, welche einen Drehzahlangleich zwischen den Zahnrädern (4, 6; 11, 16; 12, 17; 13, 18; 14, 19; 15, 20) eines zahnradpaares und den zugehörigen Getriebewellen (1, 3, 8) bewirkt, wenn die Zahnräder (4, 6; 11, 16; 12, 17; 13, 18; 14, 19; 15, 20) wieder an ihre jeweilige Getriebewelle (1, 3, 8) angekoppelt werden.

2. Getriebe nach Anspruch 1, **dadurch gekennzeichnet, dass** an den Wellen-Naben-Verbindungen zwischen der Getriebewelle (32) und den Zahnrädern (30), die kein Drehmoment übertragen, jeweils ein Lager (31) und eine lösbare formschlüssige Verbindung (33, 34) ausgebildet ist.

3. Getriebe nach Anspruch 2, **dadurch gekennzeichnet, dass** die lösbare formschlüssige Verbindung zwischen der Getriebewelle (32) und den Zahnrädern (30), die kein Drehmoment übertragen, durch mindestens eine radial verschiebbare, federkraftbeaufschlagte Passfeder (34) realisiert ist, die mit Hilfe einer Betätigungseinrichtung (39) mit einer nabenseitigen Nut (33) in dem zugehörigen Zahnrad (30) formschlüssig verbindbar ist.

4. Getriebe nach Anspruch 3, **dadurch gekennzeichnet, dass** die Betätigungseinrichtung (39) drehfest mit der Getriebewelle (32) verbunden ist und mit einer axial verschiebbaren Nase (38) ausgestattet ist, die mit einer Rampe (37) zusammenwirkt, die an der Passfeder (34) ausgebildet ist.

5. Getriebe nach Anspruch 4, **dadurch gekennzeichnet, dass** die zu der nabenseitigen Nut (33) des zugehörigen Zahnrads (30) gerichetete Kontaktfläche der Passfeder (34) leicht gekrümmt ausgebildet ist.

6. Getriebe nach Anspruch 1, **dadurch gekennzeichnet, dass** die Getriebewelle (3) als Hohlwelle ausgeführt ist und die darauf befindlichen Zahnräder (1) als Losräder, die kein Drehmoment übertragen, durch eine in der Hohlwelle (3) befindliche Schaltstange (3a) mit einer Betätigungseinrichtung formschlüssig mit der hohl ausgeführten Getriebewelle verbunden werden können.

## Claims

1. Gearbox, in particular a vehicle gearbox or a machine tool gearbox for torque transmission, having at least one first toothed gear (4, 11, 12, 13, 14, 15; 30) mounted on a gear shaft (1, 3; 32) and at least one second toothed gear (6, 16, 17, 18, 19, 20) mounted on another gear shaft (8), whereby the two toothed gears (4, 6; 11, 16; 12, 17; 13, 18; 14, 19; 15, 20) are constantly in direct or indirect operative engagement with each other, whereby the toothed gears (4, 6; 11, 16; 12, 17; 13, 18; 14, 19; 15, 20) that do not transmit any torque may be decoupled from the associated gear shafts (1, 3; 8) in order to avoid clattering and rattling sounds, **characterised in that** for both toothed gears (4, 6; 11, 16; 12, 17; 13, 18; 14, 19; 15, 20) of each gear pair, a synchronising mechanism (4a, 6a, 14a, 19a) is provided, which brings about a rotary speed equalisation between the toothed gears (4, 6; 11, 16; 12, 17; 13, 18; 14, 19; 15, 20) of a gear pair and the associated gear shafts (1, 3, 8) if the toothed gears (4, 6; 11, 16; 12, 17; 13, 18; 14, 19; 15, 20) are coupled again to their respective gear shaft (1, 3, 8).

2. Gearbox according to Claim 1, **characterised in that** at each shaft-hub connection between the gear shaft (32) and the toothed gears (30) that transmit no torque, a bearing (31) and a releasable form-fitting connection (33, 34) are formed.

3. Gearbox according to Claim 2, **characterised in that** the releasable form-fitting connection between the gear shaft (32) and the toothed gears (30) that transmit no torque is realised with at least one radially displaceable spring force impacted adjusting spring (34), which may be connected with the aid of an actuating device (39) to a groove (33) in the hub side of the associated toothed gear (30) in form-fitting manner.

4. Gearbox according to Claim 3, **characterised in that** the actuating device (39) is linked in non-rotating manner to the gear shaft (32) and is equipped with an axially displaceable nose (38) which interacts with a ramp (37) formed on the adjusting spring (34).

5. Gearbox according to Claim 4, **characterised in that** the contact surface of the adjusting spring (34) directed towards the groove (33) on the hub side of the associated toothed gear (30) is designed slightly curved.

6. Gearbox according to Claim 1, **characterised in that** the gear shaft (3) is designed as a hollow shaft and the toothed gears (1) situated thereon and designed as idling gears which do not transmit any torque, may be connected via a gear change rod (3a) situated in the hollow shaft (3) with an actuating mechanism in form-fitting manner to the hollow gear shaft.

## Revendications

1. Transmission, en particulier transmission pour véhicule ou transmission pour machine-outil, destinée à transmettre un couple de rotation, laquelle transmission comporte au moins une première roue dentée (4, 11, 12, 13, 14, 15 ; 30) montée sur un arbre de transmission (1, 3 ; 32) et au moins une deuxième roue dentée (6, 16, 17, 18, 19, 20) montée sur un autre arbre de transmission (8), les deux roues dentées (4, 6 ; 11, 16 ; 12, 17 ; 13, 18 ; 14, 19 ; 15, 20) étant en permanence en liaison active directe ou indirecte l'une avec l'autre, et les roues dentées (4, 6 ; 11, 16 ; 12, 17 ; 13, 18 ; 14, 19 ; 15, 20), qui ne transmettent aucun couple de rotation, pouvant être découplées afin d'empêcher la génération de bruits de claquement et de cliquetis provenant des arbres de transmission associés (1, 3 ; 8),
**caractérisée en ce qu'**il est prévu à chaque fois pour les deux roues (4, 6 ; 11, 16 ; 12, 17 ; 13, 18 ; 14, 19 ; 15, 20) d'une paire de roues dentées un dispositif de synchronisation (4a, 6a, 14a, 19a) qui génère un équilibrage des couples de rotation entre les roues dentées (4, 6 ; 11, 16 ; 12, 17 ; 13, 18 ; 14, 19 ; 15, 20) d'une paire de roues dentées et les arbres de transmission associés (1, 3, 8) lorsque les roues dentées (4, 6 ; 11, 16 ; 12, 17 ; 13, 18 ; 14, 19 ; 15, 20) sont de nouveau couplées à leur arbre de transmission respectif (1, 3, 8).

2. Transmission selon la revendication 1, **caractérisée en ce qu'**un palier (31) et une liaison à verrouillage de forme amovible (33, 34) sont respectivement agencés au niveau des liaisons arbre-moyeu, entre l'arbre de transmission (32) et les roues dentées (30) qui ne transmettent aucun couple de rotation.

3. Transmission selon la revendication 2, **caractérisée en ce que** la liaison à verrouillage de forme amovible prévue entre l'arbre de transmission (32) et les roues dentées (30) qui ne transmettent aucun couple de rotation, est réalisée par au moins un ressort d'ajustage (34) mobile radialement et sollicité par une force élastique, lequel ressort d'ajustage peut être relié par verrouillage de forme, à l'aide d'un dispositif de commande (39), à une gorge (33) ménagée dans la roue dentée associée (30) du côté du moyeu.

4. Transmission selon la revendication 3, **caractérisée en ce que** le dispositif de commande (39) est relié fixe en rotation à l'arbre de transmission (32) et est doté d'un ergot (38) mobile axialement qui coopère avec une rampe (37) qui est agencée au niveau du ressort d'ajustage (34).

5. Transmission selon la revendication 4, **caractérisée en ce que** la surface de contact du ressort d'ajustage (34), qui est dirigée vers la gorge (33) ménagée dans la roue dentée associée (30) du côté du moyeu, est conformée avec une légère courbure.

6. Transmission selon la revendication 1, **caractérisée en ce que** l'arbre de transmission (3) est réalisé sous la forme d'un arbre creux, et **en ce que** les roues dentées (1), se trouvant sur l'arbre creux et agencées en roues libres qui ne transmettent aucun couple de rotation, peuvent être reliées par une tringle de commande (3a), disposée dans l'arbre creux (3), à un dispositif de commande par verrouillage de forme avec l'arbre de transmission de structure creuse.
